# EUROPEAN PATENT APPLICATION

(11) **EP 4 154 733 A1**
(43) Date of publication of application: **29.03.2023**
(21) Application number: 22197317.5
(22) Date of filing: 23.09.2022
(51) Int. Cl.: A23N 12/02, A01D 33/08

(54) **CLEANING DEVICE FOR CLEANING AGRICULTURAL PRODUCTS AND USE THEREOF**

(30) Priority: 23.09.2021 BE 202105750
(71) Applicant: V.D.W. Constructie, 9950 Waarschoot (BE)
(72) Inventor: WILLEMS, Erwin, 9950 WAARSCHOOT (BE)
(74) Representative: Gevers Patents

(57) **Abstract**

The invention provides a cleaning device (1) for agricultural products, wherein the cleaning device (1) is provided with a cleaning module (3), wherein the cleaning module (3) comprises a cylindrical cleaning part (6) having a casing (8) extending around its longitudinal direction (7), wherein the casing (8) together with the cylindrical cleaning part (6) is arranged to carry out a rotation, in use, around the longitudinal direction (7), wherein the cleaning module (3) comprises a cleaning drum (11), wherein the cleaning drum (10) is arranged to carry out a rotation in use.

## Description

### Technical domain

The present invention relates to a cleaning device for cleaning agricultural products. In particular, the present invention relates to a cleaning device for cleaning contaminated tubers, for example beets and/or other tubers. In particular, the cleaned beets can be used for many purposes, such as producing biogas, feeding animals, etc.

### Prior art

Cleaning devices for cleaning agricultural products, such as for example tubers, such as for example beets, are already known from the art. For example, the company 'VDW Constructie' markets a beet cleaning and cutting device, known as the "Cleaner Tiger", for cleaning and cutting contaminated beets in order to obtain cut and cleaned beets. The known device comprises a cleaning module for cleaning the contaminated beets in use, so as to obtain the contaminated part, such as sand or weeds, on the one hand, and cleaned beets on the other. The cleaning module is arranged upstream from a cutting module for cutting the cleaned beets in use, so that cut and cleaned beets are obtained. To this end, the agricultural products are brought to the cleaning module through an inlet opening of the device. The agricultural products are transported along the cleaning module and the cutting module to an outlet opening according to a transport path. The cleaning module comprises a cylindrical cleaning part comprising a casing extending around the longitudinal axis of the cylindrical cleaning part. The cylindrical cleaning part is arranged to be rotatable about its longitudinal axis so that the casing rotates together with the cylindrical cleaning part around the longitudinal axis in use. The cleaning module is arranged so that in use, the agricultural products are deposited onto the casing. The casing is provided with at least one helical protrusion for pushing the agricultural products away, under the influence of the rotation of the casing, along the transport path and toward the outlet opening. The casing is provided with openings to allow debris that for example falls off of the agricultural products, to fall through the openings out of the transport path so that the agricultural products are cleaned.

A drawback of such devices, however, is that this cleaning method proves insufficient in certain circumstances, for example depending on the soil in which the agricultural products are grown, such as for example sand or loam, or the moisture content of the soil.

### Description of the invention

It is an aim of the present invention to provide a cleaning device for cleaning agricultural products that allows a further improved cleaning to be realized.

This aim is realized by means of the cleaning device according to the present invention.

Such a cleaning device for cleaning agricultural products is provided with an inlet opening, a cleaning module and an outlet opening that are interconnected in such a way that in use, the contaminated agricultural products are guided from the inlet opening along the cleaning module to the outlet opening according to a transport path. The cleaning module is arranged for cleaning the contaminated agricultural products and for that purpose comprises a cylindrical cleaning part having a casing extending around its longitudinal direction. The casing, together with the cylindrical cleaning part, is arranged for carrying out a rotation, in use, around the longitudinal direction of the cylindrical cleaning part. The cleaning module is arranged so that in use, the agricultural products are deposited onto the casing. The casing is provided with at least one protrusion for pushing the agricultural products away, under the influence of the rotation of the casing, along the transport path.

More in particular, the cleaning module comprises a cleaning drum for collecting the agricultural products therein. The cleaning drum is arranged to carry out a rotation in use and thus clean the agricultural products, for example by tumbling them about, and to guide the agricultural products along the transport path.

Such a cleaning drum allows further cleaning of the agricultural products so as to achieve an improved cleaning.

According to preferred embodiments of the present invention, the cleaning module comprises a drive shaft onto which both the casing and the cleaning drum are secured so that the drive shaft is arranged to drive both the rotation of the casing and the rotation of the cleaning drum. Such a drive allows a single shaft to drive both the cleaning drum and the casing, which may for example facilitate construction and maintenance.

According to further embodiments of the present invention, the cylindrical cleaning part extends into the cleaning drum so that the cleaning drum extends at least partly around the cylindrical cleaning part and is secured onto the cylindrical cleaning part, wherein the at least one protrusion on the casing is arranged so that the agricultural products are transported, in use, along the transport path on the casing into the cleaning drum, where they fall into the cleaning drum and are transported further along the transport path. Such a configuration allows a relatively simple construction of the transport path over the cylindrical cleaning part towards the cleaning drum.

According to further embodiments of the present invention, the cylindrical cleaning part comprises a further casing extending around its longitudinal direction, wherein the further casing is arranged to carry out a rotation, in use, together with the cylindrical cleaning part, around the longitudinal direction of the cylindrical cleaning part, wherein the cleaning module is arranged so that in use, due to the rotation of the cleaning drum and the cylindrical cleaning part, the agricultural products are deposited from the cleaning drum onto the further casing. The further casing allows the agricultural products to be transported along the transport path out of the cleaning drum again in a relatively simple way. Moreover, due to the further use of the cylindrical cleaning part for this purpose, the construction can remain relatively simple.

According to further embodiments of the present invention, the further casing is further provided with at least one protrusion, for further pushing the agricultural products away along the transport path under the influence of the rotation of the further casing. The protrusion on the further casing allows the agricultural products to be further transported to the outlet opening in a relatively simple way.

According to embodiments of the present invention, the protrusion on the casing, and/or on the further casing if present, is for example in the form of a ridge, arranged at an incline relative to the longitudinal direction of the cylindrical cleaning part, which, when bumping against the tubers, is able to convert part of the rotation into a push along for example the transport path, for example along the longitudinal direction of the cylindrical cleaning part. The inclined ridge may for example be part of a helical ridge provided around the casing. The angle of the ridge relative to the longitudinal direction of the cylindrical cleaning part may for example be selected in consideration of the desired cleaning and the nature of the tubers.

According to embodiments of the present invention, the cleaning drum extends at least partly around the further casing, and entraining elements are provided on the cleaning drum for entraining the agricultural products, due to the rotation, out of the cleaning drum onto the further casing. By providing such entraining elements, means are provided for transporting the tubers out of the cleaning drum along the transport path using a relatively simple construction.

According to embodiments of the present invention, the cleaning drum is provided with at least one bowl-shaped recess in the vicinity of the further casing, preferably several bowl-shaped recesses, for collecting the agricultural products. Such recesses allow the agricultural products to be collected in a relatively simple way for further transport along the transport path.

According to embodiments, the first and the further casing are part of a single casing extending along substantially the entire length of the cylindrical cleaning part. Such a configuration allows a relatively simple construction.

According to embodiments, the at least one of the at least one casing comprises openings to allow the passage of debris from the cleaning of the agricultural products. According to embodiments of the present invention, the cleaning drum comprises openings to allow the passage of debris from the cleaning of the agricultural products. Such openings in the casing or in the cleaning drum allow a simple removal of debris, for example coming from the agricultural products or present between the agricultural products, such as for example rocks, sand, etc. The debris may for example fall out of the cleaning device through the openings.

According to embodiments of the present invention, the cleaning drum is mounted in a water bath. Such a bath allows further cleaning of the agricultural products, including debris that is less easily removable by for example the mechanical action of the cylindrical cleaning part.

The invention further relates to a cutting and cleaning device comprising a cleaning device according to the present invention, wherein a cutting device is arranged at the outlet opening of the cleaning device for cutting the agricultural products.

According to embodiments of the present invention, the device, preferably the cutting and cleaning device, comprises a transporting device for further transporting the agricultural products cut by the cutting device.

The invention further relates to the use of the device according to the present invention, wherein agricultural products are added to the inlet opening, cleaned along the transport path, and transported to the outlet opening.

According to embodiments of the present invention, the agricultural products are tubers, in particular beets.

### Brief description of the drawings

The invention will hereafter be elucidated in further detail by means of the following description and the appended drawings.
Figure 1 shows a cleaning device according to an embodiment of the present invention in a side view.
Figure 2 shows the cleaning device of figure 1 in a front view.
Figure 3 shows the cleaning device of figure 1 in perspective view.
Figure 4 shows a longitudinal cross section of the cleaning device of figure 1.
Figure 5 shows a top view of a further longitudinal cross section of the cleaning device of figure 1.
Figure 6a shows a side view of a part of figure 1.
Figure 6b shows a rear view of the part of figure 6a.
Figure 6c shows a longitudinal cross section of the part of figure 1.
Figure 7 shows the part of figure 6a in perspective view.

### Modes for carrying out the invention

The present invention will hereafter be described with respect to particular embodiments and with reference to certain drawings, but the invention is not limited thereto and is defined only by the claims. The drawings shown here are merely schematic depictions and are nonlimiting. In the drawings, the dimensions of certain parts may be exaggerated, meaning that the parts in question are not drawn to scale, being for illustrative purposes only. The dimensions and the relative dimensions do not necessarily correspond to the actual reductions to practice of the invention.

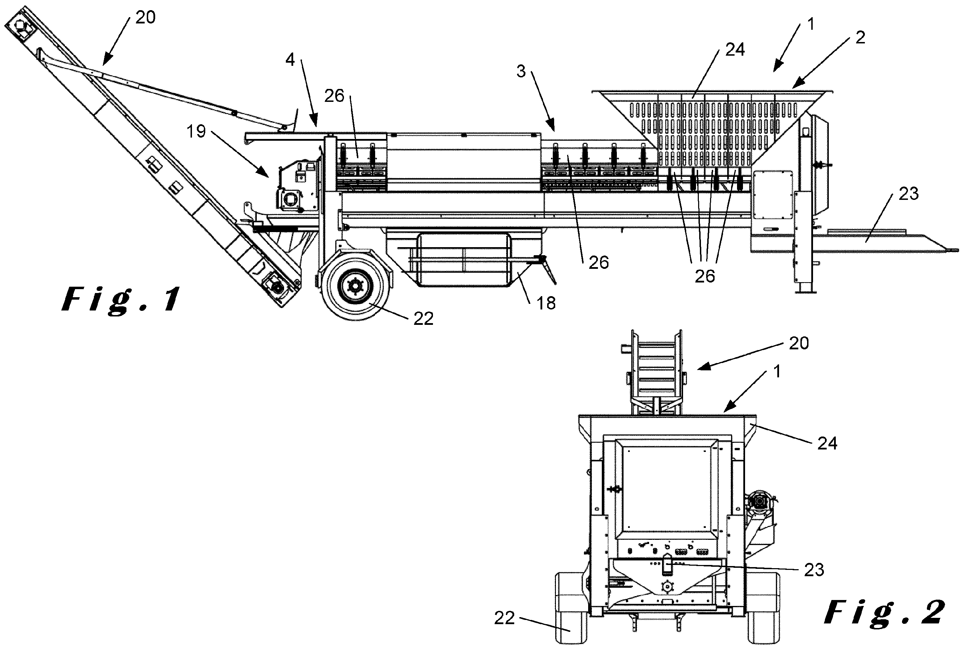

Figure 1 shows a cleaning device according to an embodiment of the present invention in a side view.

More in particular, figure 1 shows that the cleaning device 1 is provided with an inlet opening 2, a cleaning module 3 and an outlet opening 4. The inlet opening 2, the cleaning module 3 and the outlet opening 4 are interconnected in such a way that in use, the contaminated agricultural products are guided from the inlet opening 2 along the cleaning module 3 to the outlet opening 4 according to a transport path 5.

Figure 1 further shows that the cleaning device 1 is provided with a cutting device 19 at the outlet opening 4 for cutting the agricultural products, in which case it is often called a cutting and cleaning device. Figure 1 further shows that the device 1 further comprises a transporting device 20, downstream from the cutting device 19, for further transporting the cut agricultural products. Although such an arrangement allows the different processing treatments to be combined in a single device, the arrangement is not necessary for the present invention. For example, it is possible to provide a cleaning device 1 without a cutting device 19, yet still provided with a transporting device 20, or a cleaning device 1 with a cutting device 19 but without a transporting device 20, depending on the agricultural products and the intended processing of the agricultural products. The transporting device 20 shown in figure 1 is arranged for transporting the agricultural products upwards, for example for transferring the agricultural products into a container.

The cleaning device 1 shown in figure 1 can be used for different agricultural products 25. Preferably, however, the cleaning device 1 is used for cleaning tubers such as for example beets.

The cleaning device 1 as shown is provided with wheels so that the cleaning device can easily be transported between different working locations. Thus, the agricultural products 25 can be cleaned virtually onsite after harvesting, and optionally even be cut by the cutting device 19 and again further transported by the transporting device 20. To further facilitate the transporting of the cleaning device 1, the cleaning device 1 is further provided with a pole 23 for easy coupling of the cleaning device 1 to a vehicle, for example a tractor.

Figure 1 further shows that a hopper 24 is provided at the inlet opening 2, into which the agricultural products can fall, for example when tipping out a container or from a transporting device. The hopper 24 allows the agricultural products to be more easily collected and guided towards the inlet opening 2.

Figure 1 further shows that the device 1 extends along a longitudinal direction 21 and that the transport path 5 mainly extends along the longitudinal direction 21 of the device 1. Furthermore, figure 1 shows that the transport path 5 extends substantially horizontally.

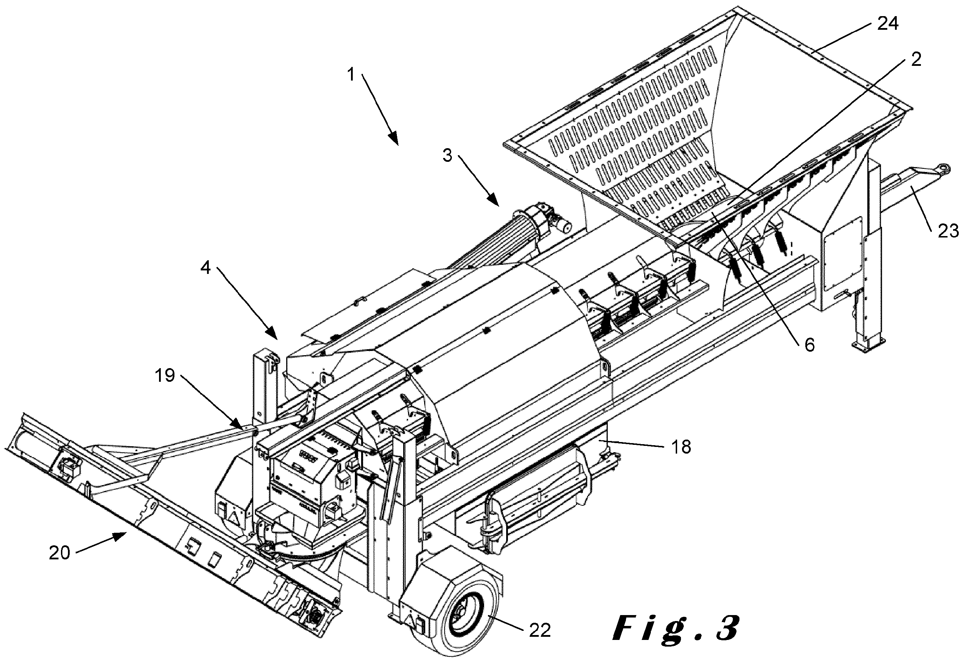

The device 1 is further shown in different views in figures 2 and 3.

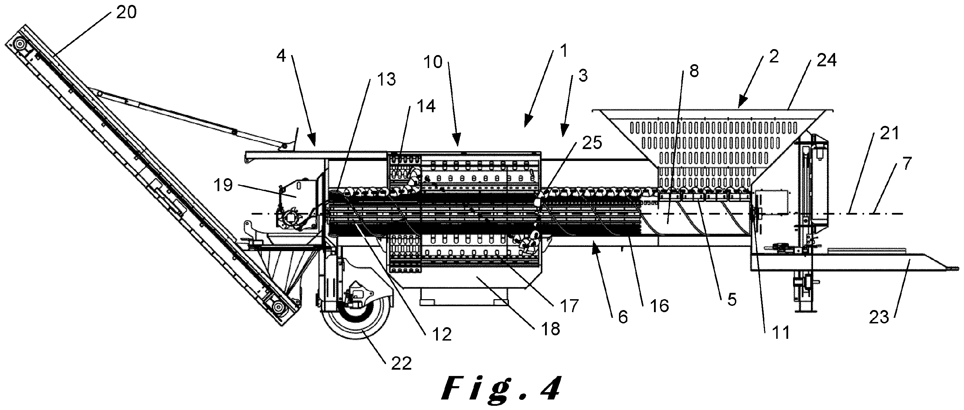

Figure 4 shows a longitudinal cross section of the cleaning device 1. In particular this figure shows the cleaning module 3 in more detail.

The cleaning module 3 is arranged for cleaning the contaminated agricultural products, and for that purpose, comprises a cylindrical cleaning part 6 having a casing 8 extending around its longitudinal direction 7, 12. The casing 8, 12 is arranged for carrying out a rotation in use, together with the cylindrical cleaning part 6, around the longitudinal direction 7 of the cylindrical cleaning part 6.

Figure 4 shows that the cylindrical cleaning part 6 extends from the inlet opening 2 to the outlet opening 4. This is, however, not necessary for the present invention. The cylindrical cleaning part 6 may also extend only partly between the inlet opening 2 and the outlet opening 4. In this way, different cylindrical cleaning parts 6 may be provided, even having different diameters or rotation speeds or even rotation directions. However, providing a single cylindrical cleaning part 6 allows a simpler construction of the device 1, combined with a sufficient cleaning of the agricultural products 25.

Figure 4 further shows that the casing 8 also extends substantially from the inlet opening 2 to the outlet opening 4. The cylindrical cleaning part 6, as shown in figure 4, preferably comprises a first casing 8 and a second casing 12. In the embodiment shown in figure 4, the first casing 8 and the second casing 12 are part of a single casing 8, 12. The first and the second casing 8, 12 may also be separate casings, but the configuration shown allows the cylindrical cleaning part 6 to be constructed in a relatively simple way.

The cleaning module 3 is arranged so that in use, the agricultural products are deposited from the inlet opening 2 onto the casing 8, 12, more in particular the first casing 8, and are transported further along the transport path 5.

For further transporting the agricultural products 25 along the transport path 5, the first 8 and the second casing 12 are provided with at least one protrusion 9, 13 for pushing the agricultural products away, under the influence of the rotation of the casing 8, along the transport path 5. The protrusions 9, 13 shown in figure 4 are helically shaped around the casing 8, 12 for pushing the agricultural products along the transport path 5 under the influence of the rotation of the casing 8, 12.

Figure 4 further shows that the casing 8, 12 comprises openings 16 to allow the passage of debris from the cleaning of the agricultural products.

The casing 8, 12 shown in figure 4 is part of the bottom of a duct along which the agricultural products are guided along the transport path 5.

The casing 8, 12 shown in the figures is constructed in large part from slats arranged along the longitudinal direction 7 of the cylindrical cleaning part 6. Preferably, the longitudinal direction of the slats is arranged along the longitudinal direction 7 of the cylindrical cleaning part 6. However, the casing 8, 12 may for example also be constructed from a plate having openings therein. Figure 4 also shows that the casing 8, 12 may partly be constructed from a closed plate, more in particular, in figure 4, the casing 8.

Due to the rotation of the cylindrical cleaning part 6, and more in particular the casing 8, 12, the agricultural products, in addition to being transported along, are also shaken up somewhat, causing debris to be removed from the agricultural products, without allowing the agricultural products to leave the device unintentionally. To avoid larger pieces of debris, such as for example larger rocks, getting stuck between the cylindrical cleaning part 6 and border walls of the duct, at least one of the border walls is provided with ejection flaps 26 where the cylindrical cleaning part 6 most closely borders the border wall. These ejection flaps 26 for example allow the larger pieces of contamination, such as pebbles and rocks, to be removed from the duct so as to leave the device 1. Similar ejection flaps 26 are for example also described by BE1026741. The ejection locations 26 are shown in different figures, but are in particular indicated in figure 1. Figure 1 also shows that the flaps 26 can be provided at different heights relative to the cylindrical cleaning part 6, depending on the desired effects.

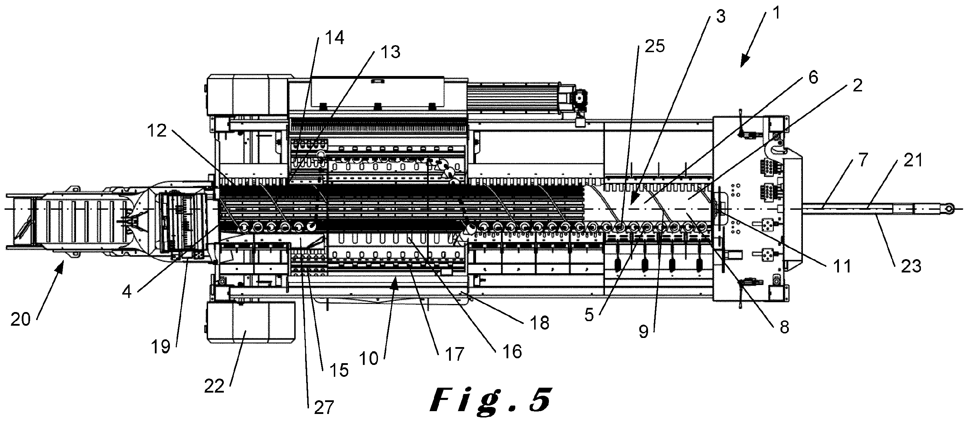

Figure 5 shows a top view of a further longitudinal cross section of the cleaning device of figure 1.

Figures 4 and 5 further show that the cleaning module 3 comprises a cleaning drum 11 for collecting the agricultural products 25 therein. The cleaning drum 10 is arranged to carry out a rotation in use and thus to clean the agricultural products 25, and to guide the agricultural products along the transport path 5.

The cleaning drum 10 further comprises openings 17 to allow the passage of debris from the cleaning of the agricultural products 25.

Figure 5 further shows that the cleaning drum 10 is mounted in a tank 18 in which a water bath 18 can be provided for further cleaning of the agricultural products 25.

Figure 4 further shows a few schematically depicted agricultural products 25 in order to further indicate the transport path 5 within the device 1.

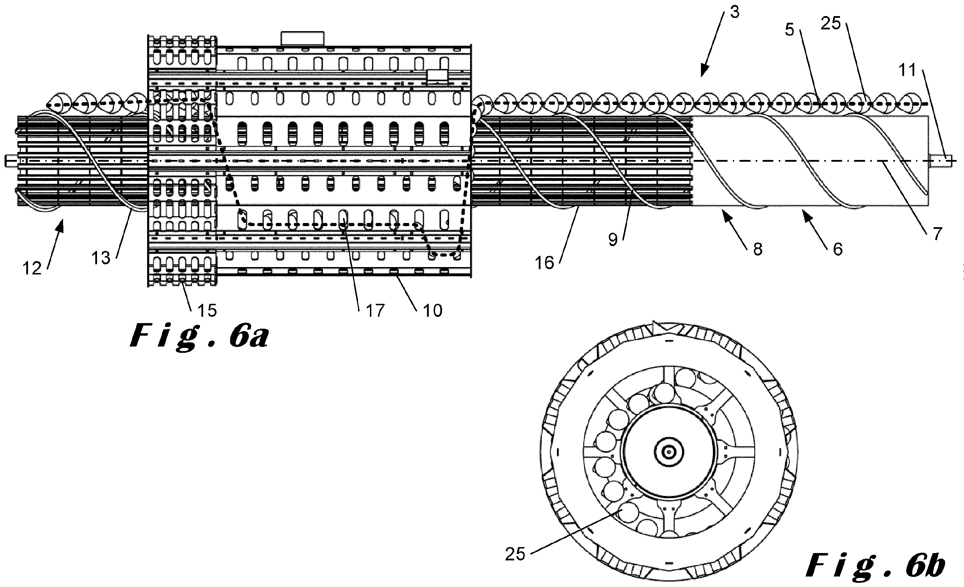

Figure 6a shows a side view of the cleaning module 3 of figure 1.

Figure 6b shows a rear view of the part of figure 6a.

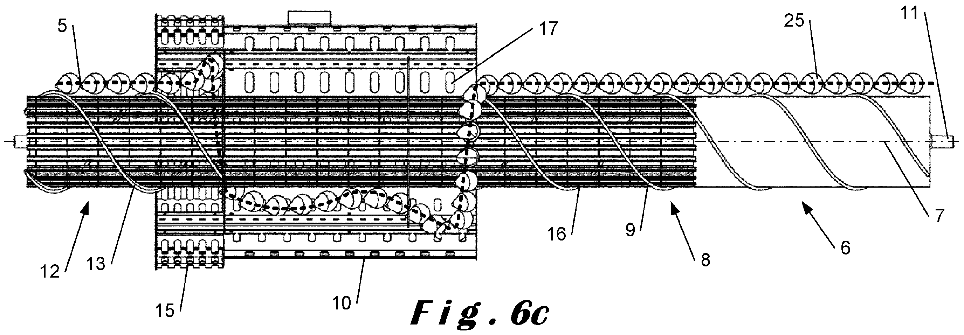

Figure 6c shows a longitudinal cross section of the part of figure 1. Moreover, figure 6c shows a few agricultural products 25 in more detail so as to further show the transport path 5. The transport path 5 shown mainly runs in the longitudinal direction 21 of the cleaning device 1 and/or the longitudinal direction 7 of the cylindrical cleaning part 6.

Figures 6a - 6c show that the cleaning module 3 comprises a drive shaft 11 onto which both the casing 8 and the cleaning drum 10 are secured so that the drive shaft 11 is provided to drive both the rotation of the casing 8 and the rotation of the cleaning drum 10. The cylindrical cleaning part 6 extends into the cleaning drum 10 so that the cleaning drum 10 extends at least partly around the cylindrical cleaning part 6 and is secured onto the cylindrical cleaning part 6. The at least one protrusion 9 on the casing 8 is arranged so that the agricultural products are transported, in use, along the transport path 5 on the casing 8 into the cleaning drum 10, where they fall into the cleaning drum 10 and are transported further along the transport path 5.

The cleaning drum 10 extends at least partly, preferably entirely as shown in the figures, around the further casing 12, and entraining elements 14 are provided on the cleaning drum 10 for entraining the agricultural products out of the cleaning drum 10, due to the rotation, onto the further casing 12.

Further, figure 5 shows that a plate 27 is provided in order to prevent the agricultural products 25, after being transported onto the cylindrical cleaning part 6, preferably again, along the transport path 5, from falling back off the cylindrical cleaning part 6. To this end, this plate 27 does not move along with the cylindrical cleaning part 6 and is mounted stationary relative to the drive shaft 11. More in particular, the plate 27 is preferably mounted at the location where the cylindrical cleaning part 6 begins or is already carrying out its downward rotation.

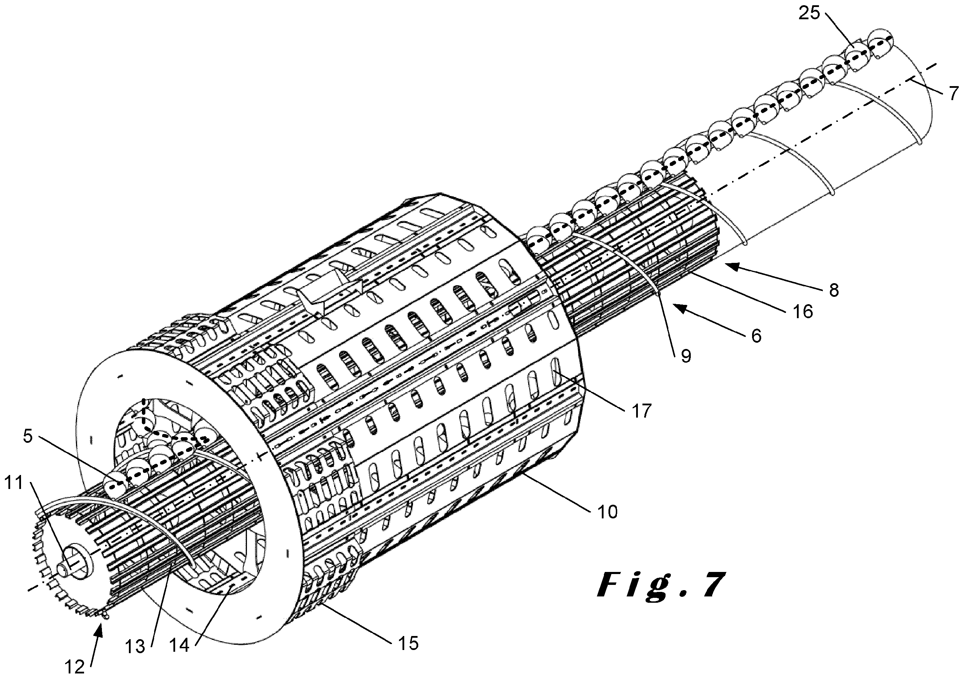

Figure 6c and 7 further show that the cleaning drum 10 is provided with bowl-shaped recesses 15 in the vicinity of the further casing 12 for collecting the agricultural products.

In particular, figures 6a- 6c and 7 show that the cylindrical cleaning part 6 extends throughout the entire cleaning drum 10, wherein the cylindrical cleaning part 6 protrudes from both sides of the cleaning drum 10. This is however not necessary, as the cylindrical cleaning part 6 may also extend only partly through the cleaning drum 10. If, however, the cylindrical cleaning part 6 extends throughout the cleaning drum 10 in this way, the cleaning drum 10 can be mounted onto the cylindrical cleaning part 6 in a relatively simple way.

It should be noted that the longitudinal direction 7 of the cylindrical cleaning part 6 is substantially horizontal when the device 1 is in use. Indeed, an incline of the longitudinal direction 7 is not required for moving the agricultural products along due to the presence of for example the protrusions 9, 13 on the casing 8, 12.

Although certain aspects of the present invention have been described in reference to specific embodiments, it should be clear that these aspects may be implemented in other forms.
1. Cleaning device
2. Inlet opening
3. Cleaning module
4. Outlet opening
5. Transport path
6. Cylindrical cleaning part
7. Longitudinal direction cylindrical cleaning part
8. First casing
9. First protrusion
10. Cleaning drum
11. Drive shaft
12. Second casing
13. Second protrusion
14. Entraining elements
15. Bowl-shaped recesses
16. Openings in casing
17. Openings in cleaning drum
18. Water bath
19. Cutting device
20. Transporting device
21. Longitudinal direction of cleaning device
22. Wheels
23. Pole
24. Hopper
25. Agricultural products
26. Flap
27. Plate

## Claims

1. Cleaning device (1) for cleaning agricultural products, wherein the cleaning device (1) is provided with an inlet opening (2), a cleaning module (3) and an outlet opening (4) that are interconnected in such a way that in use, the contaminated agricultural products are guided from the inlet opening (2) along the cleaning module (3) to the outlet opening (4) according to a transport path (5), wherein the cleaning module (3) is arranged for cleaning the contaminated agricultural products and for that purpose comprises a cylindrical cleaning part (6) having a casing (8) extending around its longitudinal direction (7), wherein the casing (8) together with the cylindrical cleaning part (6) is arranged to carry out a rotation, in use, around the longitudinal direction (7) of the cylindrical cleaning part (6), wherein the cleaning module (3) is arranged so that in use, the agricultural products are deposited onto the casing (8), wherein the casing (8) is provided with at least one protrusion (9) for pushing the agricultural products away, under the influence of the rotation of the casing (8), along the transport path (5), **characterized in that** the cleaning module (3) comprises a cleaning drum (11) for collecting the agricultural products therein, wherein the cleaning drum (10) is arranged to carry out a rotation in use and thus clean the agricultural products, and to guide the agricultural products along the transport path (5).

2. The cleaning device (1) according to the preceding claim, wherein the cleaning module (3) comprises a drive shaft (11) onto which both the casing (8) and the cleaning drum (10) are secured so that the drive shaft (11) is provided to drive both the rotation of the casing (8) and the rotation of the cleaning drum (10).

3. The cleaning module (1) according to the preceding claim, wherein the cylindrical cleaning part (6) extends into the cleaning drum (10) so that the cleaning drum (10) extends at least partly around the cylindrical cleaning part (6) and is secured onto the cylindrical cleaning part (6), wherein the at least one protrusion (9) on the casing (8) is arranged so that the agricultural products are transported, in use, along the transport path (5) on the casing (8) into the cleaning drum (10), where they fall into the cleaning drum (10) and are transported further along the transport path (5).

4. The cleaning device (1) according to the preceding claim, wherein the cylindrical cleaning part (6) comprises a further casing (12) extending around its longitudinal direction, wherein the further casing (12) is arranged to carry out a rotation, in use, together with the cylindrical cleaning part (6), around the longitudinal direction (7) of the cylindrical cleaning part (6), wherein the cleaning module (3) is arranged so that in use, due to the rotation of the cleaning drum (10) and the cylindrical cleaning part (6), the agricultural products are deposited from the cleaning drum (10) onto the further casing (12).

5. The cleaning device (1) according to the preceding claim, wherein the further casing (12) is further provided with at least one protrusion (13), for further pushing the agricultural products away along the transport path (5) under the influence of the rotation of the further casing (12).

6. The cleaning device (1) according to claim 4 or 5, wherein the cleaning drum (10) extends at least partly around the further casing (12) and entraining elements (14) are provided on the cleaning drum (10) for entraining the agricultural products, due to the rotation, out of the cleaning drum (10) onto the further casing (12).

7. The cleaning device (1) according to any of the claims 4 - 6, wherein the cleaning drum (10) is provided with at least one bowl-shaped recess (15) in the vicinity of the further casing (12) for collecting the agricultural products.

8. The cleaning device (1) according to any of the preceding claims, at least combined with claim 4, wherein the first and the further casing (8, 12) are part of a single casing (8, 12) extending along substantially the entire length of the cylindrical cleaning part (6).

9. The cleaning device (1) according to any of the preceding claims, wherein at least one of the at least one casing (8, 12) comprises openings (16) to allow the passage of debris from the cleaning of the agricultural products.

10. The cleaning device (1) according to any of the preceding claims, wherein the cleaning drum (10) comprises openings (17) to allow the passage of debris from the cleaning of the agricultural products.

11. The cleaning device according to the preceding claim wherein the cleaning drum is mounted in a water bath (18).

12. Cutting and cleaning device comprising a cleaning device according to any of the preceding claims, wherein a cutting device (19) is arranged at the outlet opening of the cleaning device for cutting the agricultural products.

13. The cutting and cleaning device according to the preceding claim comprising a transporting device (20) for further transporting the agricultural products cut by the cutting device (19).

14. Use of the device according to any of the preceding claims, wherein agricultural products are added to the inlet opening (2), cleaned along the transport path (5), and transported to the outlet opening (4).

15. Use according to the preceding claim, wherein the agricultural products are tubers, in particular beets.
